# EUROPÄISCHE PATENTSCHRIFT

(11) **EP 0 879 725 B1**
(45) Veröffentlichungstag und Bekanntmachung des Hinweises auf die Patenterteilung: **05.12.2001**
(21) Anmeldenummer: 98102851.7
(22) Anmeldetag: 19.02.1998
(51) Int. Cl.: B60K 11/08

(54) **Verfahren zur Herstellung von Metall-Kunststoff-Verbundelementen**
Method of manufactoring metal-plastic composite elements
nrocédé de fabrication d'éléments composites en matière métal-plastique

(30) Priorität: 22.05.1997 DE 19721378
(43) Veröffentlichungstag der Anmeldung: 25.11.1998
(73) Patentinhaber: Thyssen Krupp Stahl AG, 47166 Duisburg (DE)
(72) Erfinder: Dieterich, Günter, 44289 Dortmund (DE); Piel, Karlheinz, 58239 Schwerte (DE); Pleugel, Lothar, Dr., 58640 Iserlohn (DE)

(56) Entgegenhaltungen:
- EP-A- 0 732 234
- WO-A-96/40551
- GB-A- 2 119 710
- US-A- 5 573 613

## Beschreibung

Die Erfindung betrifft ein Verfahren gemäß dem Oberbegriff des Patentanspruchs 1.

Bei der Herstellung von Metall-Kunststoff-Verbundelementen, wie sie z.B. aus der EP 0 732 234 A2 (beinhaltet die Merkmale des Oberbegriffs des 1 - Anspruchs) bekannt sind, durch Aufbringen von Kunststofflagen (Laminieren) auf der Ober- und der Unterseite winkelförmig profilierter Metallkerne (Metallstäbe) werden Thermoplaste und Duroplaste als Verbindungsschichten sowohl der Kunststoff-Gewebelagen untereinander, als auch zur Verbindung der Gewebepakete mit dem Metallkem benutzt.

Neben dem Vakuum-Sack-Verfahren wird auch die Pressentechnik für die Fertigung solcher Werkstücke eingesetzt (beide Verfahren prinzipiell beschrieben z.B. in Fleming, M.; Ziegmann, G.; Roth, S.; Faserverbundweisen, Springer-Verlag Berlin Heidelberg New York 1996).

Beiden Verfahren ist gemeinsam, dass sie zum Fügen winkelbehafteter Elemente, Formelemente als Ober- und Unterformen zur Einstellung der gewünschten Teilegeometrie benutzen. Ferner wenden beide Verfahren als gemeinsames Kriterium die Methode der mittelbaren Einbringung der zum Prozeßablauf erforderlichen thermischen Energie an. Zudem muß nach Reaktionsabschluß die Wärme des gesamten Aufbaus Werkstück/Formelemente im Rahmen des Abkühlzyklus nach außen abgeführt werden.

Beim Vakuum-Sack-Verfahren werden die lose zusammengefügten Einzellagen des späteren Verbundkörpers in formenden Vorrichtungen fixiert und durch Evakuieren des sie vollständig überdeckenden Vakuumsacks über textile Hilfselemente mit einer Druckkraft beaufschlagt. Nach dieser vorbereiteten Phase wird das Gesamtarrangement entweder durch Heizplatten oder durch Einbringen in einen geschlossenen Ofenraum erwärmt.

An den Erwärmzyklus mit einer maximalen Prozeßtemperatur von ca. 200° C schließt sich, insbesondere bei Thermoplasten, unmittelbar ein Abkühlzyklus unter weiterhin wirksamem Druck an, welcher der Stabilisierung des Formlings dient.

Bei der Teileherstellung durch die Pressentechnik wird der notwendige Druck durch eine Presse (hydraulisch, pneumatisch, mechanisch) erzeugt. Die Einzellagen des späteren Werkstücks werden im Falle nicht ebener Gestalt in Preßformen (Ober-und Unterform) fixiert.

Die Form selber wird entweder mittels Elektroheizplatten oder durch ein wärmeübertragendes Fluid beheizt. Kühleinrichtungen dienen zur Realisierung des Abkühlzyklus.

Aufgrund der physikalischen Gegebenheiten der Wärmeleitung und des Wärmeübergangs sind die beiden zitierten Verfahren durch relativ lange Erwärm- und Abkühlzyklen gekennzeichnet. Das zieht relativ lange Prozeßzeiten mit relativ geringem Werkstückdurchsatz pro Zeiteinheit und Fertigungsaggregat nach sich.

Aus der DE 27 40 071 A1 ist ein Verfahren zum Zusammenfügen von Bauteilen von Scheinwerfern oder Leuchten für Kraftfahrzeuge bekannt. Dabei werden aus Kunststoff bestehende Reflektorteile bzw. Gehäuseteile mit einer Frontabdeckscheibe an ihren Rändern miteinander verbunden, indem ein spiralförmiges Verbindungsstück aus Metall als Zusatzelement und nur als Zusatzelement, welches für das Bauteil an sich nicht relevant ist, zwischen die Ränder der Teile eingelegt und erwärmt, wodurch dieses Verbindungsstück in einer ersten Phase in den erweichten Kunststoff des Randes des Teiles eindringt. Nachdem die Erwärmung des Verbindungsstückes unterbrochen und der Kunststoff des Reflektorteiles bzw. des Gehäuses wieder in einen festen Zustand übergegangen ist, werden diese Teile mit der Frontabdeckscheibe über eine zusätzliche Klebstoffschicht zusammengefügt. Dieses bekannte Verfahren kann aber keinerlei Hinweis geben auf eine Lösung der der Erfindung zugrunde liegenden Aufgabe.

Von daher liegt der Erfindung die Aufgabe zugrunde, ein Verfahren der eingangs genannten Art zu schaffen, mit dem auf einfache Weise eine Verbesserung der Wirtschaftlichkeit des Laminiervorgangs bei der Herstellung nicht ebener Werkstücke mit Metallkern, beispielsweise solcher wie in der EP 0 732 234 A2 beschrieben, erreicht werden kann.

Durch die unmittelbare Erwärmung des Metallkerns wird dessen thermische Energie zum Verkleben desselben mit den in der Regel elektrisch nicht leitenden und zweckmäßigerweise vorgefertigten Ober- und Unterschalen (Lagenpakete aus Kunststoff, miteinander verklebt) benutzt.

Die thermische Energie des Metallkerns schmilzt die thermoplastische oder duroplastische Klebmasse, in der Regel als Folie ausgebildet, die sich zwischen Metallkern und Ober- bzw. Unterschale befindet, auf. Die Klebefolie kann hierbei bereits Bestandteil der vorgefertigten Ober- und Unterschale sein und sowohl mit dem eigentlichen Matrixmaterial identisch als auch unterschiedlich zu diesem sein. Durch einen äußeren Druckaufbau, zweckmäßigerweise durch eine Presse, werden die drei Teilelemente des Werkstücks, Oberschale, Unterschale und Metallkern, form- und kraftschlüssig miteinander verbunden.

Neben der Erwärmphase wird durch das erfindungsgemäße Verfahren auch die anschließende Abkühlphase des Prozesses gegenüber dem Stand der Technik deutlich reduziert. Während bei dem bekannten zitierten Verfahren entsprechend dem Stand der Technik die thermische Energie des Gesamtsystems Formen-Gesamtwerkstück abgeführt werden muß, ist bei dem erfindungsgemäßen Verfahren lediglich die Wärmeenergie des zuvor auf Prozeßtemperatur erwärmten Metallkerns abzuführen. Da letztere aus Massegründen um Größenordnungen geringer ist als im ersten Fall, ergeben sich dementsprechend auch deutlich verkürzte Zyklusdauern.

Als ein weiterer positiver Effekt des erfindungsgemäßen Verfahrens ist die deutlich reduzierte Neigung zur Relativbewegung ("Verschwimmen") zwischen den drei Komponenten Oberschale, Unterschale und Metallkern zu nennen, wodurch Maßgenauigkeit und Fertigungssicherheit erhöht werden.

Zur Vermeidung von den Klebvorgang negativ beeinflussenden Kontaminierungen des Metallkerns sollten als Energiequelle zur Metallkernerwärmung vorzugsweise elektrische Verfahren dienen, wie der direkte geregelte Stromdurchgang (resistive Erwärmung) oder die geregelte Hochfrequenzerwärmung (Erzeugen von Wirbelströmen im Metallkern). Diese beiden elektrischen Erwärmarten erlauben eine Druckbeaufschlagung der zu verklebenden Komponenten auch in der Erwärmphase selbst. Es kann somit ein Parallelprozeß realisiert werden.

Anhand der schematischen Zeichnung wird das erfindungsgemäße Verfahren nachfolgend näher erläutert.
Es zeigt
- Fig. 1: eine Möglichkeit des erfindungsgemäßen Verfahrens,
- Fig. 2: eine andere Möglichkeit des erfindungsgemäßen Verfahrens.

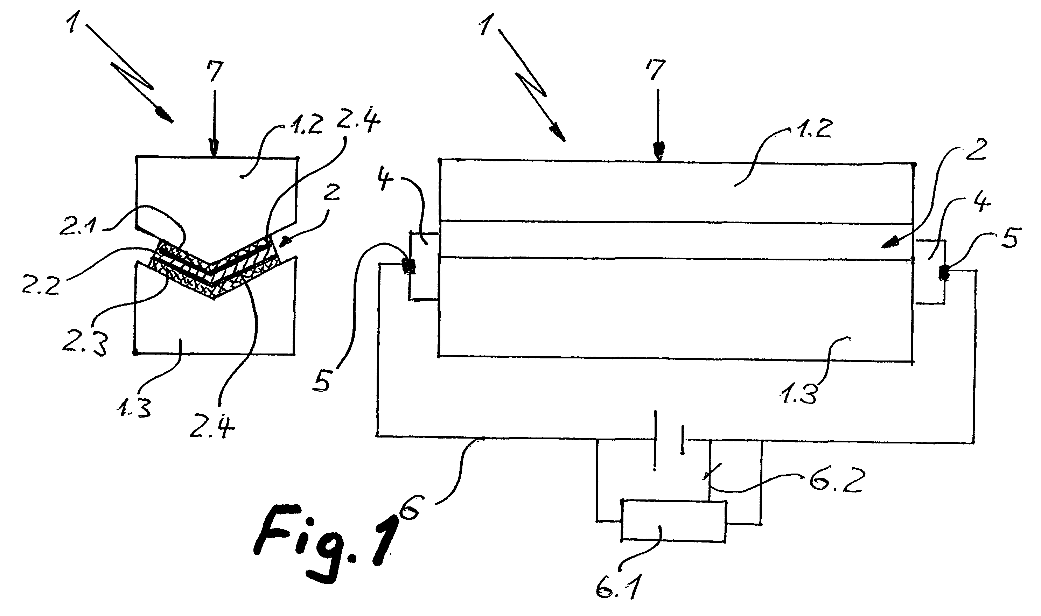

In der Fig. 1 ist das Prinzip des Parallelprozesses, Erwärmen bei gleichzeitiger Druckbeaufschlagung für ein Verfahren mit resistiver Erwärmung dargestellt.

In ein Formelement 1, das aus Oberform 1 2 und Unterform 1.3 besteht, ist ein zu laminierendes Werkstück 2, bestehend aus Obers'chale 2.1, Metallkern 2.2 und Unterschale 2.3 eingelegt. Der Metallkern 2.2 ist als winkelförmiger Stab ausgebildet. Die Länge des Metallkerns 2.2 ist so bemessen, daß seine Enden 4 aus der Oberschale 2.1 und Unterschale 2.3 herausragen, um Kontaktklemmen 5 eines elektrischen Stromkreises 6 aufnehmen zu können. Über den Regler 6.1 wird der Stromkreis 6 entsprechend dem vorgegebenen Zeit-Temperatur-Verlauf im Metallkern 2.2 geschaltet. Der Soll-Ist-Vergleich des Regelkreises wird mittels des Thermofühlers 6.2 realisiert. Die Druckkraftbeaufschlagung des Werkstücks 2 erfolgt durch die druckerzeugende Komponente 7. Die Elemente 2.4 stellen den folienartig ausgebildeten Klebstoff dar.

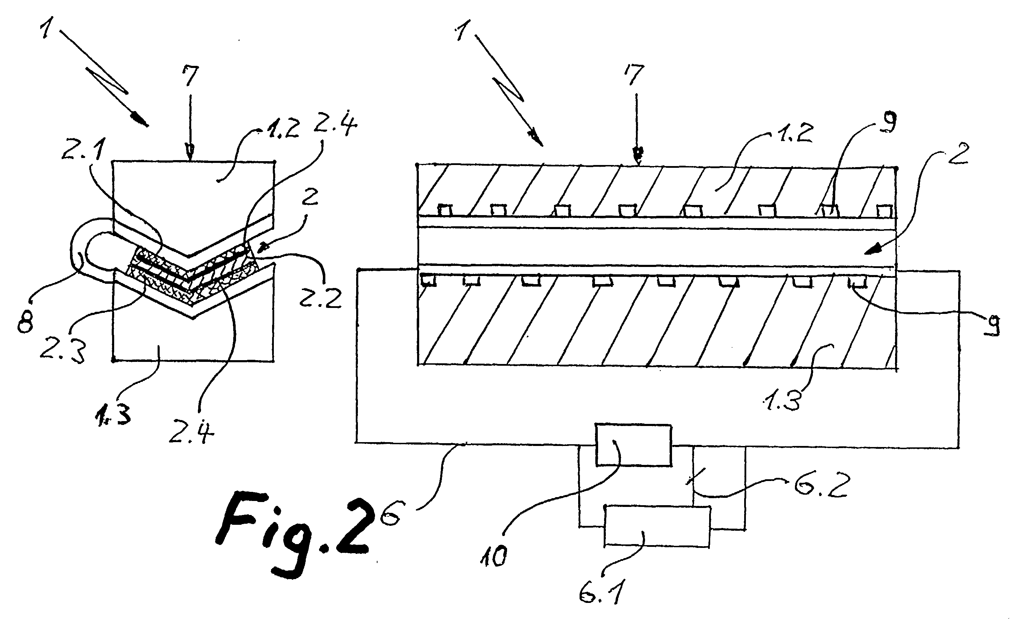

Die Fig. 2 zeigt das Prinzip des Parallelprozesses, Erwärmen bei gleichzeitiger Druckbeaufschlagung für ein Verfahren mit induktiver Erwärmung.

Auch bei dieser Verfahrensweise wird ein zu laminierendes Werkstück 2, bestehend aus Oberschale 2.1, Metallkern 2.2 und Unterschale 2.3 in ein Formelement 1, das aus Oberform 1.2 und Unterform 1.3 besteht, eingelegt. Die Elemente 2.4 stellen den folienartig ausgebildeten Klebstoff dar. Der Metallkern 2.2 ist als winkelförmiger Stab ausgebildet. Ein Induktor 8 bzw. 9 ist so ausgebildet, daß er vollständig in Oberform 1.2 und Unterform 1.3 integriert die erforderliche Druckkraft 7 des Prozesses zu übertragen gestattet. Ein HF-Generator 10 im Stromkreis 6 wird mittels des Reglers 6.1 bezüglich seiner abgegebenen Leistung so geregelt, daß im Metallkern 2.2 der gewünschte Zeit-Temperatur-Verlauf entsteht. Die aktuelle Temperatur des Metallkerns 2.2 wird durch den Thermofühler 6.2 gemessen und die entsprechende elektrische Größe dem Regler 6.1 zugeführt.

## Patentansprüche

1. Verfahren zur Herstellung von Metall-Kunststoff-Verbundelementen für einen ballistischen Grill für Panzerfahrzeuge, bestehend jeweils aus einem zweischenkligen winkelförmig profilierten Metallkern und beidseitigen Kunststoffauflagen, **dadurch gekennzeichnet, dass** die Kunststoffauflagen in einem entsprechenden aus Ober- und Unterform bestehenden Formelement mittels Einwirkung von thermischer Energie und Druckbeaufschlagung mit dem profilierten Metallkern verklebt werden, wobei der zweischenklige winkelförmig profilierte Metallkern durch einen geregelten Stromdurchgang elektrisch auf eine vorbestimmte Prozesstemperatur erwärmt wird, wobei die entstandene Wärme zum definierten Aufschmelzen eines Klebemittels zwischen Metallkern und den mit ihm zu verbindenden Kunststoffauflagen benutzt wird.

2. Verfahren nach Anspruch 1, **dadurch gekennzeichnet, dass** der zweischenklige winkelförmige Metallkern innerhalb des Formelements erwärmt wird.

3. Verfahren nach den Ansprüchen 1 und 2, **dadurch gekennzeichnet, dass** der zweischenklige winkelförmige Metallkern mittels einer resistiven Erwärmung durch elektrische Ankopplung an dessen aus dem Formelement seitlich herausragenden Enden erwärmt wird.

4. Verfahren nach den Ansprüchen 1 und 2, **dadurch gekennzeichnet, dass** der zweischenklige winkelförmige Metallkern mittels einer induktiven Erwärmung des Metallkerns durch einen in das Formelement integrierten Induktor erwärmt wird.

## Claims

1. Method of producing metal-synthetic material composite elements for a ballistic grill for armoured vehicles, consisting in each case of a two-limbed angle-profiled metal core and synthetic material layers on both sides, **characterised in that** the synthetic material layers are adhered to the profiled metal core in a corresponding moulding member consisting of an upper-half and a lower-half mould under the effect of thermal energy and the application of pressure, wherein the two-limbed angle-profiled metal core is electrically heated to a predetermined processing temperature by a controlled passage of current, wherein the resulting heat is used for defined melting of an adhesive between the metal core and the synthetic material layers to be attached thereto.

2. Method according to claim 1, **characterised in that** the two-limbed angled metal core is heated inside the moulding member.

3. Method according to claims 1 and 2, **characterised in that** the two-limbed angled metal core is heated by resistive heating by electric coupling to its ends protruding laterally out of the moulding member.

4. Method according to claims 1 and 2, **characterised in that** the two-limbed angled metal core is heated by inductive heating of the metal core by an inductor integrated into the moulding member.

## Revendications

1. Procédé pour la fabrication d'éléments composites en métal - matière synthétique pour une grille balistique pour véhicules blindés, constitués chacun d'une âme métallique profilée, à deux ailes, en forme de cornière, et de couches de revêtement en matière synthétique situées de part et d'autre, **caractérisé en ce que** les couches de revêtement en matière synthétique sont collées sur l'âme métallique profilée dans un élément de moule approprié, constitué d'un moule supérieur et d'un moule inférieur, par l'action d'énergie thermique et application d'une pression, l'âme métallique profilée en forme de cornière à deux ailes étant réchauffée électriquement à une température de traitement prédéterminée par passage contrôlé de courant, la chaleur ainsi créée étant utilisée pour une fusion définie d'un adhésif entre l'âme métallique et les couches de revêtement en matière synthétique qui doivent y être reliées.

2. Procédé selon la revendication 1, **caractérisé en ce que** l'âme métallique en forme de cornière à deux ailes est chauffée à l'intérieur de l'élément de moule.

3. Procédé selon les revendications 1 et 2, **caractérisé en ce que** l'âme métallique en forme de cornière à deux ailes est chauffée par chauffage résistif par raccordement électrique à ses extrémités qui débordent latéralement de l'élément de moule.

4. Procédé selon les revendications 1 et 2, **caractérisé en ce que** l'âme métallique en forme de cornière à deux ailes est chauffée par chauffage inductif de l'âme métallique, par un inducteur intégré à l'élément de moule.
